# EUROPEAN PATENT APPLICATION

(11) **EP 2 501 163 A1**
(43) Date of publication of application: **19.09.2012**
(21) Application number: 11290142.6
(22) Date of filing: 18.03.2011
(51) Int. Cl.: H04W 8/08

(54) **Traffic offload in a multi-access mobile communication system supporting network-based IP mobility**

(71) Applicant: Alcatel Lucent, 75007 Paris (FR)
(72) Inventor: Melia, Telemaco , Alcatel-Lucent Bell Labs France, 91620 Nozay (FR); Scahill, Frank, Ipswich (GB)
(74) Representative: El Manouni, Josiane

(57) **Abstract**

In an embodiment, there is provided a method for traffic offload in a multi-access mobile communication system supporting network-based IP mobility, said method comprising a step of:
- setting up traffic offload at access level, using network-based IP mobility related signaling.

## Description

The present invention generally relates to mobile communication systems.

Detailed descriptions of mobile communication systems can be found in the literature, such as in particular in Technical Specifications published by standardisation bodies such as for example 3GPP (3^{rd} Generation Partnership Project).

An example of multi-access mobile communication system is the Evolved Packet System EPS. EPS includes Evolved Packet Core EPC that can be accessed by both 3GPP and non-3GPP accesses. A mobile terminal (also called User Equipment UE) has access to IP-based services via EPS providing IP connectivity. EPS supports IP mobility (in particular network-based IP mobility). EPS is specified in particular in 3GPP TS 23.401 and 3GPP TS 23.402.

A new functionality called IP Flow Mobility (IFOM) is currently introduced in such systems. IP flow mobility enables movement of selected IP flows from one access to another access for a mobile terminal simultaneously connected over multiple accesses. IP flow mobility is currently specified in particular by 3GPP and IETF (Internet Engineering Task Force).

There is a need to optimize traffic in such systems. More generally, there is a need to improve network capabilities in such systems, in particular to bring more benefits to operators or service providers.

Embodiments of the present invention in particular address such needs.

These and other objects are achieved, in one aspect, by a method for traffic offload in a multi-access mobile communication system supporting network-based IP mobility, said method comprising a step of:
- setting up traffic offload at access level, using network-based IP mobility related signaling.

These and other objects are achieved, in other aspects, by entities for performing such method. Such entities in particular include network entities supporting network-based IP mobility (such as in particular Local Mobility Anchor LMA and Mobile Access Gateway MAG for Proxy Mobile IPv6 MlPv6).

Some embodiments of apparatus and/or methods in accordance with embodiments of the present invention are now described, by way of example only, and with reference to the accompanying drawings, in which:
- figure 1 illustrates an example of IP flow routing in a multi-access mobile communication system supporting network-based IP flow mobility, not supporting traffic offload at access level, according to the prior art,
- figure 2 illustrates an example of IP flow routing in a multi-access mobile communication system supporting network-based IP flow mobility, supporting traffic offload at access level, according to an embodiment of the present invention,
- figure 3 illustrates an example of network-based IP flow mobility signalling enhanced for supporting setup of traffic offload at access level, according to an embodiment of the present invention.

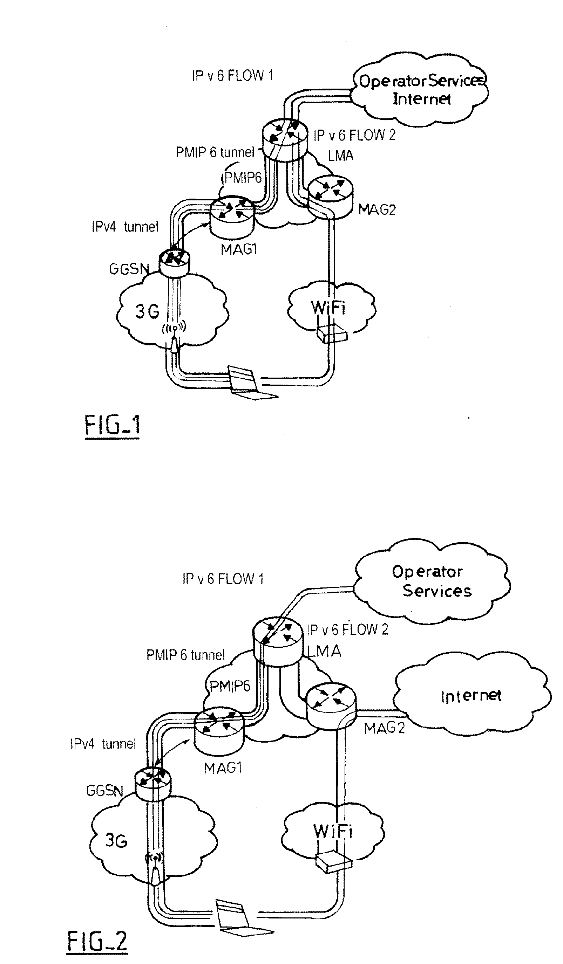

An example of multi-access system (such as for example EPS) supporting network-based IP mobility is illustrated in figures 1 and 2. In the illustrated example, network-based IP mobility corresponds to Proxy Mobile lPv6 PMIPv6 enhanced for IP flow mobility support.

PMIPv6 is specified in particular in RFC 5213. A PMIPv6 domain comprises entities called Local Mobility Anchor LMA and Mobile Access Gateway MAG.

A description of PMIPv6 extensions for flow mobility support can be found in document Proxy Mobile lPv6 Extensions to Support Flow Mobility, draft-bernardos-netext-pmipv6-flowmob-02. This document specifies two messages as extensions of the PMIPv6 standard (RFC 5213). The Flow Mobility Initiate (FMI) message is sent for the Local Mobility Anchor (LMA) to the Mobility Access Gateway (MAG) to instruct the MAG that a new flow is to be routed to the connected UE. Flows are recognized using the 5-tuples and flow mobility procedures are initiated by the LMA (any trigger can be used as input). In case the MAG accepts to route the selected flow (the FMI message contains information of the specific flows) it will acknowledge sending a Flow Mobility Acknowledge (FMA) message to the LMA. In case the operation fails the MAG answers with a specific status code.

In the illustrated example the MN has two different flows: IPv6 Flow 1 exchanged for operator controlled services, and lPv6 Flow 2 exchanged for non-operator controlled services (such as traffic exchanged with public Internet). In the illustrated example IPv6 Flow 1 is routed through 3GPP (3G) access via a MAG noted MAG1, and lPv6 Flow 2 is routed through non-3GPP (WiFi) access via a MAG noted MAG2.

The 3GPP Evolved Packet Core Architecture therefore provides (simultaneous) wireless access to 3GPP and non-3GPP radio access networks to dual mode mobile devices. In particular 3GPP aims at exploiting the complementary WLAN coverage (where possible) to minimize network congestion by means of selective traffic offloading techniques to the WIFI access. The offload service can work as a simple alternative connection with no mobility support (e.g. an additional IP address in the host device performing non seamless WLAN offload) or as a secondary connection to seamlessly offload traffic (e.g. a premium service for 3G subscribers interested in having their content accessible everywhere).

In some cases the operator or service provider might be interested in offloading traffic directly at the access network, thus avoiding routing IP flows back to the mobility anchor. In particular, in some cases the service provider might be interested in routing IP flows directly to the public Internet from the access network nodes.

However, such systems as currently specified fail to provide such capability of traffic offload at access level. In other words, as illustrated in figure 1, currently the different flows such as IPv6 Flow 1 and lPv6 Flow 2 for the MN, routed over the different wireless accesses, both go through the LMA.

Embodiments of the present invention enable to provide such capability of traffic offload at access level. For example, as illustrated in figure 2, embodiments of the present invention enable IPv6 Flow 2 to be directly routed to the Internet at access level, i.e. by MAG2.

Embodiments of the present invention enable to provide such capability of traffic offload at access level, by means of simple mechanisms, requiring few changes to current architectures, and allowing dynamic offload.

In an embodiment, the FMI and FMA messages are exchanged any time the LMA is instructed to do so and they can be reused to install temporary offload policies at the MAG.

In an embodiment, the LMA instructs the MAG to offload traffic at access level (for example, as illustrated in figure 2, LMA instructs MAG2 to route lPv6 Flow 2 traffic directly to the Internet) using IP flow mobility signaling.

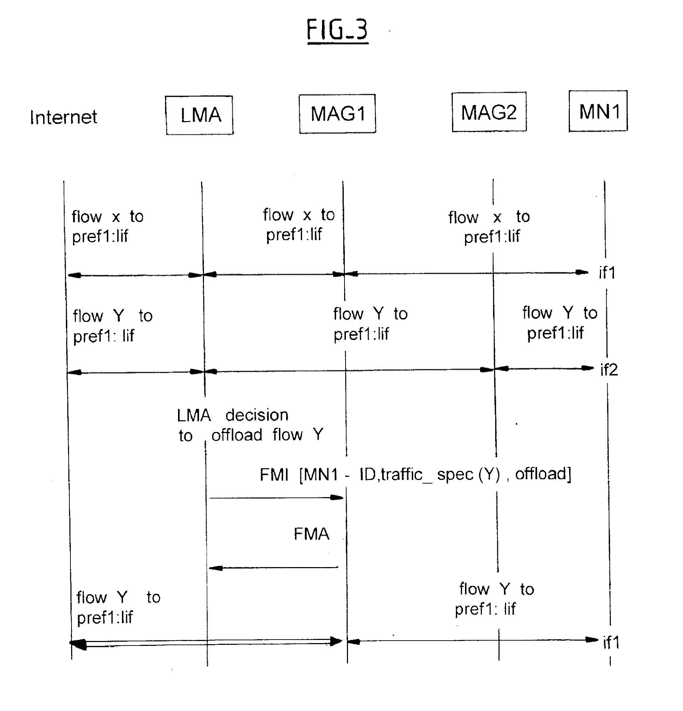

In an embodiment, as illustrated in figure 3, the IP flow mobility signalling between LMA and MAG is enhanced so that the LMA instructs the MAG to perform local routing using the FMI message.

Figure 3 illustrates, by way of example in a signalling flow taken from the above mentioned document Proxy Mobile lPv6 Extensions to Support Flow Mobility, draft-bernardos-netext-pmipv6-flowmob-02, modifications proposed in particular to the FMI message according to embodiments of the present invention. Flow X, respectively Flow Y, in figure 3 may correspond to IPv6 Flow 1, respectively lPv6 Flow 2, in figures 1 and 2. The Mobile Node is noted MN1 in figure 3.

In an embodiment, following steps may be provided as illustrated in figure 3:
- in a first step, Flow X and Flow Y are both routed by LMA,
- LMA then decides to offload Flow Y traffic at access level, and therefore sends to the MAG a FMI message containing a new field (called "offload" in the illustrated example) instructing the MAG to setup said traffic offload at access level,
- the MAG then returs a FMA message to LMA acknowledging said instruction,
- Flow Y traffic is then routed by MAG (MAG2), wheras Flow X continues to be routed by LMA.

Embodiments of the present invention enable to provide such capability of traffic offload at access level, without the MN noticing any change in the IP address configuration.

Three different cases can be distinguished: the MN is a v4 only node, the MN is a v6 only node, the MN is a dual stack node. It is assumed that the MN implements the logical interface capabilities specified in document Logical Interface Support for multi-mode IP Hosts, draft-ietf-netext-logical-interface-support-01.

If the MN is a v4 only node the following steps may be provided:
● The MN has one (or more) IP address configured on the logical interface
● The MN send packets through the logical interface which is handling the wireless medium selection
● Uplink packets belonging to the offloaded flow reach the MAG and are natted directly to the Internet
● Downlink packets coming from the Internet reach the MAG2 (NAT) and are routed to the MN
● The procedure is transparent to the MN and the LMA can remove the offload filters at any time, in this case we revert back to the configuration in figure 1.

If the MN is a v6 only node the following steps may be provided:
● Upon the FMI/FMA message exchange the MAG sends a Routing Advertisement RA to the MN containing the prefix assigned previously form the LMA and an additional prefix to locally route packets without going back to the LMA
● The RA might contain routing information (at this point not standardized)
● It is assumed that the MN performs correct source address selection for applications that should be routed directly to the Internet (functionalities such as Access Network Discovery and Selection Function ANDSF might help here).
● NAT does not apply to v6.

If the MN is a dual stack node the following steps may be provided:
● In addition to the above cases the operator might configure additional policies such as Operator Services are provided via v6 and Internet offload is provided via v4 making IP address selection simpler

As described above the LMA may send the FMI to initiate the offload to a MAG at any point. In practice offloading of an existing IP flow will result in a change in the Home Address seen by the correspondent node for that session. For many applications this will not be an issue, however for applications requiring session continuity then this is likely to cause application level problem and a poor user experience. In this case we propose that one of the triggers for the FMI be the initial uplink packet for a new flow received by the LMA . On receipt of the initial flow uplink packet from the MN the LMA can decide whether this flow should be offloaded immediately in which case the LMA will send the FMI to the MAG as described above. On receipt of the FMI the MAG will perform the routing update, send the acknowledgment FMA and forward subsequent packets for this flow received from the MN direct to the internet. In practice there is likely to be a delay between the initial uplink packet and the routing update being completed in the MAD. During this delay the MN may continue to send additional uplink packets for this flow to the LMA. We propose three alternatives
1) these additional uplink packets are discarded
2) the packets are sent to the internet with the LMA issued HoA
3) the packets are tromboned back to the source MAG

The LMA may choose either of the these approaches depending on the destination address (CN) of the uplink packets. Option 3 whilst more complex ensures that for any new flows that are offloaded then the IP address remains consistent for the duration the MN is attached to the same MAG.

In addition to a method for traffic offload (examples of which have been described above), entities comprising means for performing such a method are also provided. Such entities in particular include entities supporting network-based IP flow mobility (such as in particular Local Mobility Anchor LMA and Mobile Access Gateway MAG for Proxy Mobile IPv6 MIPv6).

The detailed implementation of the above-mentioned means does not raise any special problem for a person skilled in the art, and therefore such means do not need to be more fully disclosed than has been made above, by their function, for a person skilled in the art.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

## Claims

1. A method for traffic offload in a multi-access mobile communication system supporting network-based IP mobility, said method comprising a step of:
- setting up traffic offload at access level, using network-based IP mobility related signaling.

2. A method according to claim 1, in a system supporting network-based IP mobility enhanced for IP flow mobility support.

3. A method according to claim 1 or 2, comprising a step of:
- a core network entity supporting network-based IP mobility deciding whether traffic should be offloaded at access level.

4. A method according to any of claims 1 to 3, comprising a step of:
- a core network entity supporting network-based IP mobility deciding whether traffic should be offloaded at access level, upon reception of an initial uplink packet for said traffic.

5. A method according to any of claims 1 to 4, comprising a step of:
- a core network entity supporting network-based IP mobility instructing an access network entity supporting network-based IP mobility to setup traffic offload at access level.

6. A method according to any of claims 1 to 5, comprising a step of:
- an access network entity supporting network-based IP mobility setting up traffic offload at access level, upon receiving instruction from a core network entity supporting network-based IP mobility.

7. A method according to any of claims 1 to 6, comprising a step of:
- an access network entity supporting network-based IP mobility acknowledging instruction to setup traffic offload at access level, received from a core network entity supporting network-based IP mobility.

8. A method according to any of claims 1 to 7, comprising a step of:
- an access network entity supporting network-based IP mobility, upon receiving instruction from a core network entity supporting network-based IP mobility to setup traffic offload at access level for an lPv6 Mobile Node MN, sending Routing Advertisement including new address configuration information for said MN.

9. A method according to any of claims 1 to 8, wherein:
- network-based IP mobility corresponds to Proxy Mobile lPv6 PMIPv6,
- a core network entity supporting network-based IP mobility corresponds to a Local Mobility Anchor LMA,
- an access network entity supporting network-based IPmobility corresponds to a Mobile Access Gateway MAG.

10. A method according to any of claims 1 to 9, comprising, in a system supporting Proxy Mobile lPv6 PMIPv6 enhanced for IP flow mobility support, a step of:
- a Local Mobility Anchor LMA sending to a Mobile Access gateway MAG a Flow Mobility Initiate FMI message including instruction to setup traffic offload at access level.

11. A method according to any of claims 1 to 10, comprising, in a system supporting Proxy Mobile lPv6 PMIPv6 enhanced for IP flow mobility support, a step of:
- a Mobile Access Gateway MAG sending to a Local Mobility Anchor LMA a Flow Mobility Acknowledge FMA message including acknowledgement of instruction to setup traffic offload at access level.

12. A core network entity supporting network-based IP mobility in a multi-access mobile communication system, such as in particular Local Mobility Anchor LMA, said entity comprising means for performing a method according to any of claims 1 to 11.

13. An access network entity supporting network-based IP flow mobility in a multi-access mobile communication system, such as in particular Mobile Access Gateway MAG, said entity comprising means for performing a method according to any of claims 1 to 11.
